# EUROPEAN PATENT SPECIFICATION

(11) **EP 3 486 559 B1**
(45) Date of publication and mention of the grant of the patent: **23.03.2022**
(21) Application number: 17382783.3
(22) Date of filing: 20.11.2017
(51) Int. Cl.: F21S 45/00, B60Q 1/00, B60R 16/02

(54) **LIGHTING DEVICE AND METHOD FOR MANUFACTURING A LIGHTING DEVICE**
BELEUCHTUNGSVORRICHTUNG UND VERFAHREN ZUR HERSTELLUNG EINER BELEUCHTUNGSVORRICHTUNG
DISPOSITIF D'ÉCLAIRAGE ET PROCÉDÉ DE PRODUCTION D'UN DISPOSITIF D'ÉCLAIRAGE

(43) Date of publication of application: 22.05.2019
(73) Proprietor: Valeo Iluminacion, 23600 Martos (ES)
(72) Inventor: TEBA, Daniel, 23600 MARTOS (ES)
(74) Representative: Valeo Visibility

(56) References cited:
- WO-A1-2011/146060
- FR-A1- 3 049 521
- JP-A- H11 242 901
- US-A- 3 745 327
- US-A1- 2006 089 021

## Description

### TECHNICAL FIELD

This invention is related to the field of the manufacturing of automotive lighting devices, and more specifically to the positioning of cables or wires on a lighting device housing.

### STATE OF THE ART

Vehicles lighting devices requires an increasing number of electric connections to perform new functions, providing a safer and advanced performance.

A harness of wires is used to make information and electric supply reach each one of the light sources of the lighting device. This harness is distributed in different bundles throughout the housing, because lighting modules must be located in specific positions to fulfil strict lighting regulations.

The arrangement of an increasing number of electronic elements inside the housing makes that these bundles must cross. Each time two bundles cross, more space is needed, and the movement of these bundles is restricted. These restrictions may create some stresses in the conductive wires forming the bundles, which may threaten their correct operation and functionalities. Document JPH11242901 A discloses an automotive lighting device of the prior art.

### DESCRIPTION OF THE INVENTION

The invention provides a solution for this problem by means of an automotive lighting device according to claim 1, a method for manufacturing a lighting device according to claim 12. Preferred embodiments of the invention are defined in dependent claims.

In an inventive aspect, the invention provides an automotive lighting device comprising
an automotive lighting device housing comprising at least a first protrusion and a second protrusion, the first protrusion protruding a first protrusion height from the automotive lighting device housing until a first protrusion top base and the second protrusion protruding a second protrusion height from the automotive lighting device housing until a second protrusion top base;
a first lower conductive wire arranged in contact with the automotive lighting device housing between the first and the second protrusions, the first lower conductive wire having a first lower wire height with respect to the automotive lighting device housing, the first lower wire height being lower than the first protrusion height and the second protrusion height;
a second lower conductive wire arranged adjacent to the second protrusion and having a second lower wire height;
an upper conductive wire deposited in contact with the top bases of the first and second protrusions, and in electrical contact with the second lower conductive wire.

Even if the electronic assembly may comprise further lower conductive wires and further upper conductive wires, when the upper conductive wire is in contact with the top bases of the first and second protrusions, the upper conductive wire is not in electric contact with the first lower conductive wire.

Advantageously, in the electronic assembly of the invention, conductive wires which are arranged in different directions are allowed to cross requiring very little space to do so, since the thickness of only one wire is raised from the top surface of the protrusions. Such lighting devices may be smaller, and more reliable, since they do not have an amount of harnesses around the housing cavity.

In some particular embodiments, the second lower conductive wire is located between the second protrusion and a third protrusion which has a third protrusion height lower than the second lower wire height.

Advantageously, when the upper conductive wire is in contact with a third protrusion with a lower protrusion height, the upper conductive wire may be in electric contact with a lower conductive wire adjacent to that third protrusion.

In some particular embodiments, the automotive lighting device further comprises at least one of
further lower conductive wires deposited in contact with the automotive lighting device housing, and not in electrical contact with the upper conductive wire;
further protrusions, each further protrusion comprising a further top base, and
further upper conductive wires, each further upper conductive wire being deposited in contact with at least one of the further top bases.

While the electronic assembly comprises more and more upper and lower conductive wires, the advantages of this invention raises, since the vertical space used is the same, and the electrical connections may be more complex.

In some particular embodiments, each protrusion comprises a secondary housing at its top base, this secondary housing intended to keep one upper conductive wire partially housed in this secondary housing.

Keeping the upper conductive wires at least partially housed in housings ensures isolation between them and allows a more optimum electrical design.

In some particular embodiments, each protrusion comprises
a base portion; and
a contact portion, the contact portion containing the top base and being detachable from the base portion of the protrusion,
so that when the contact portion is detached an upper conductive wire in contact with the base portion makes contact with a lower conductive wire which is located between this base portion and another protrusion, and
wherein the size of the base portion is enough to guide a lower conductive wire which is located between this base portion and another protrusion.

These embodiments provide versatility to the conductive wires arrangement, since every protrusion has the ability of having its contact portion detached, creating multiple connection possibilities for the crossing wires. Any diversion may be made in this circuit in an easy way, so that a wire may be in electric contact with only one selected of many crossing wires.

In some particular embodiments, there is a frangible element delimiting the contact portion from the base portion of the protrusion.

In these lighting devices, no specific tools may be required to remove the contact portion from the base portion of the protrusion, which may be made easily and quickly.

In some particular embodiments, the automotive lighting device housing is electrically insulating, and the upper conductive wire and the lower conductive wire are bare wires.

In these embodiments, a faster deposition is allowed, since several machines may deposit bare wires on a plastics surface. Hence, the manufacturing process may be put in an assembly line.

In some particular embodiments, protrusions are arranged in a matrix defining row paths and column paths between them, and a lower conductive wire comprises a first portion arranged in a row path and a second portion arranged in a different row path.

This arrangement allows a lower conductive wire to change the row when it reaches a protrusion which has a detached contact portion, so that the lower conductive wire does not contact the upper conductive wire which is in contact with the adjacent lower conductive wire.

In some particular embodiment, some protrusions belonging to the same row are joint forming a wall.

This arrangement achieves a better guidance of the lower conductive wire.

In a further inventive aspect, the invention provides a method for manufacturing such a lighting device. This method comprising the steps of
providing an automotive lighting device housing comprising at least a first protrusion and a second protrusion, the first protrusion protruding a first protrusion height from the automotive lighting device housing until a first protrusion top base and the second protrusion protruding a second protrusion height from the automotive lighting device housing until a second protrusion top base;
providing a first lower conductive wire arranged in contact with the automotive lighting device housing, the first lower conductive wire having a first lower wire height with respect to the automotive lighting device housing and being arranged between the first and the second protrusions, the lower wire height being lower than the first protrusion height and the second protrusion height;
providing a second lower conductive wire arranged adjacent to the second protrusion and having a second lower wire height;
providing an upper conductive wire deposited in contact with the top bases of the first and second protrusions, and in electrical contact with the second lower conductive wire.

This method produces a lighting device where conductive wires occupy little space in the housing, allowing these devices to be smaller and better internally organized.

In some particular embodiments, the method further comprises the step of detaching a contact portion from a protrusion, so that
a base portion of the detachable protrusion remains in contact with the automotive lighting device housing;
the upper conductive wire in contact with the base portion makes contact with the second lower conductive wire which is located between this base portion and another protrusion, and
the second lower conductive wire which is located between this base portion and another protrusion is guided between this base portion and the other protrusion.

These embodiments provide versatility to the conductive wires arrangement, since every protrusion has the ability of having its contact portion detached, creating multiple connection possibilities for the crossing wires. Any diversion may be made in this circuit in an easy way, so that a wire may be in electric contact with only one selected of many crossing wires.

The invention also refers to an automotive lighting device obtained by a method according to the previous inventive aspect.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of a lighting device according to the invention.
Figure 2 shows a detailed view of a generic protrusion of a lighting device according to the invention.
Figure 3 shows a plan view of a lighting device according to the invention.
Figures 4a to 4e show cross section views of the lighting device of Figure 3.
Figure 5 shows a perspective view of a different embodiment of a lighting device according to the invention.
Figures 6a to 6d show the steps of a method according to the invention.
Figure 7 shows an automotive vehicle with a lighting device according to the invention.

### DETAILED DESCRIPTION OF THE INVENTION

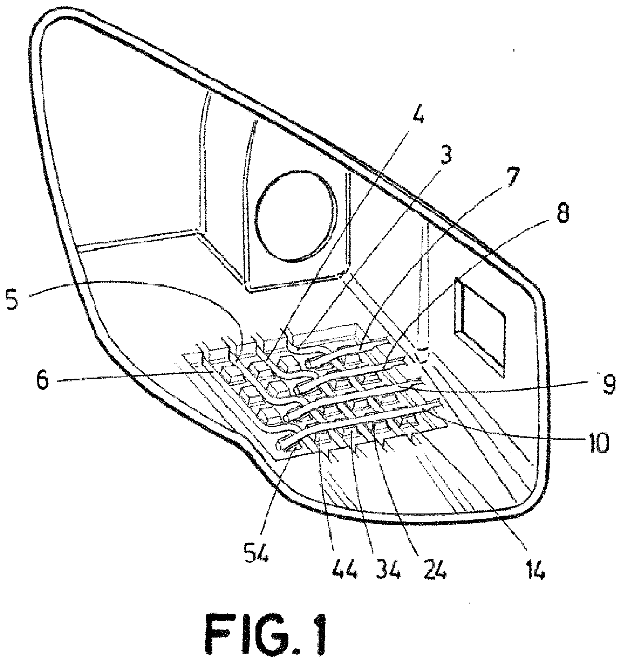

Figure 1 shows a perspective view of a lighting device 1 according to the invention. This lighting device 1 comprises
an automotive lighting device housing 2 comprising a plurality of protrusions (only one of them, 24, is referenced);
a plurality of lower conductive wires 3, 4, 5, 6 arranged in contact with the automotive lighting device housing 2;
a plurality of upper conductive wires 7, 8, 9, 10 deposited in contact with the protrusions.

In this embodiment, a first upper conductive wire 7 is only in electric contact with a first lower conductive wire 3, a second upper conductive wire 8 is only in electric contact with a second lower conductive wire 4, a third upper conductive wire 9 is only in electric contact with a third lower conductive wire 5 and a fourth upper conductive wire 10 is only in electric contact with a fourth lower conductive wire 6.

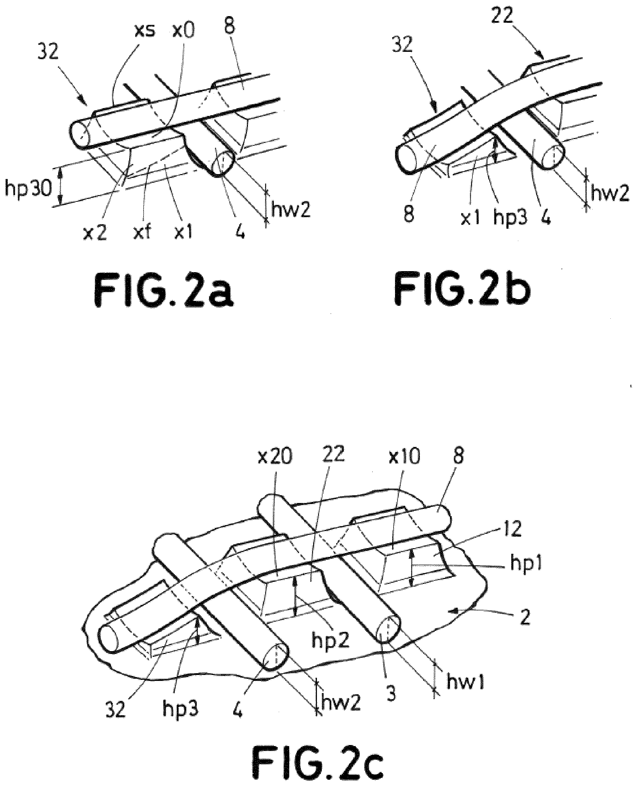

Figures 2a, 2b and 2c shows a generic protrusion 32. This protrusion 32 comprises a base portion x1 and a contact portion x2. The contact portion x2 contains the top base x0 and is detachable from the base portion x1 of the protrusion.

In the embodiment of the present figure, there is a frangible element xf delimiting the contact portion from the base portion x1 of the protrusion.

This protrusion further comprises a secondary housing xs at its top base, this secondary housing xs being intended to keep one upper conductive wire 8 partially housed in this secondary housing xs.

Figure 2a shows the protrusion 32 before the contact portion x2 is detached. The upper conductive wire 8 is not in contact with the lower conductive wire 4, since the height hp30 of the protrusion 32 is greater than the height hw2 of the lower conductive wire 4, the latter being understood as the distance that the lower conductive wire 4 is far from the automotive lighting device housing 2.

Figure 2b shows the protrusion 32 after the contact portion x2 has been detached. Due to the fact that the contact portion x2 has been detached, the upper conductive wire 8 is now in contact with the base portion x1, and therefore it makes contact with the lower conductive wire 4, which is located between this base portion x1 and another protrusion 22. The height hp3 of the base portion x1 of the protrusion 32 is lower than the height hw2 of the lower conductive wire 4, but it is enough to guide the lower conductive wire 4, which is located between this base portion x1 and another protrusion 22.

Figure 2c shows an automotive lighting device 1 according to the invention.

The automotive lighting device housing 2 comprises a first protrusion 12 and a second protrusion 22, the first protrusion 12 protruding a first protrusion height hp1 from the automotive lighting device housing 2 until a first protrusion top base x10 and the second protrusion 22 protruding a second protrusion height hp2 from the automotive lighting device housing 2 until a second protrusion top base x20.

This automotive lighting device also comprises a first lower conductive wire 3 arranged in contact with the automotive lighting device housing 2 between the first 12 and the second 22 protrusions, the first lower conductive wire 3 having a first lower wire height hw1 with respect to the automotive lighting device housing 2, the first lower wire height hw1 being lower than the first protrusion height hp1 and the second protrusion height hp2.

This automotive lighting device also comprises a second lower conductive wire 4 arranged between the second protrusion 22 and a third protrusion 32, and having a second lower wire height hw2.

This automotive lighting device also comprises an upper conductive wire 8 deposited in contact with the top bases x10, x20 of the first 12 and second 22 protrusions. The third protrusion height hp3 is lower than the second lower wire height hw2, so the upper conductive wire 8 is in electrical contact with the second lower conductive wire 4.

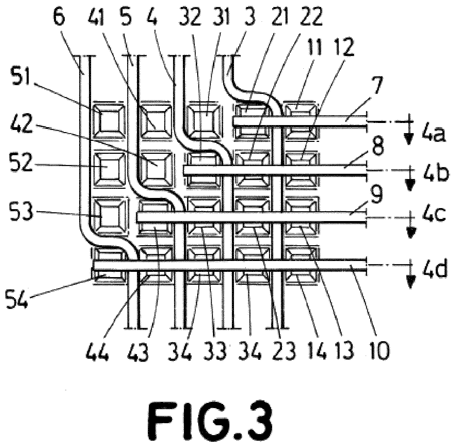

Figure 3 shows a plan view of a different embodiment of a lighting device 1 according to the invention.

The protrusions 11-15, 21-25, 31-35, 42-45 are arranged in a matrix defining row paths and column paths between them.

Each one of the upper conductive wires 7, 8, 9, 10 are deposited in contact with the top base of some protrusions. The first upper conductive wire 7 is in contact with the top base of only one protrusion 11 and then contacts the first lower conductive wire 3 but, for example, the third upper conductive wire 9 is in contact with the top bases of three protrusions 13, 23, 33 and then contacts the third lower conductive wire 5.

The lower conductive wires 3, 4, 5, 6 have a portion which is arranged between two protrusions. For example, a first lower conductive wire 3 is arranged between a first pair of protrusions 11, 21, a second pair of protrusions 12, 22, a third pair of protrusions 13, 23 and a fourth pair of protrusions 14, 24.

Thus, each upper conductive wire 7, 8, 9, 10 is in electric contact only with one of the lower conductive wires 3, 4, 5, 6. Since the upper conductive wires 7, 8, 9, 10 are arranged in contact with the top portions of the protrusions, this causes the isolation of the upper conductive wires from contacting the undesired lower conductive wires. In this case, the top portions of the protrusions define a plane which is higher than the lower conductive wires, to avoid contact. However, it is not necessary that all the top portions of the protrusions are contained in the same plane.

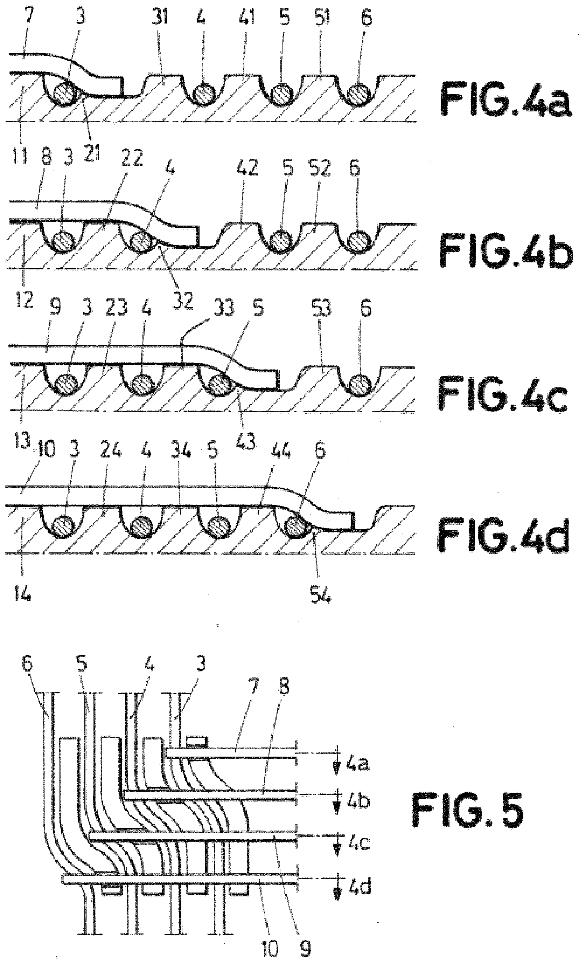

Figures 4a to 4d show four different cross sections of a detail of this electronic assembly. These cross sections show the relative position between the lower 3, 4, 5, 6 and upper 7, 8, 9, 10 conductive wires.

In this particular case, as shown in Figure 4a, a first upper conductive wire 7 is in electrical contact with a first lower conductive wire 3. As shown in Figure 4b, a second upper conductive wire 8 is in contact with a second lower conductive wire 4, but crosses over the first lower conductive wire 3 without being in electrical contact with it. As shown in Figure 4c, a third upper conductive wire 9 is in contact with a third lower conductive wire 5, but crosses over the first 3 and second 4 lower conductive wires without being in electrical contact with them. Finally, as shown in Figure 4d, a fourth upper conductive wire 10 is in contact with a fourth lower conductive wire 6, but crosses over the first 3, second 4 and third 5 lower conductive wires without being in electrical contact with them.

To achieve this arrangement, the contact portions of specific protrusions 21, 32, 43, 54 have been removed. In figure 2a, the contact portion has been removed in the case of protrusion 21, thus allowing electric contact between the first lower conductive wire 3 and the first upper conductive wire 7. In figure 2b, the contact portion has been removed in the case of protrusion 32, thus allowing electric contact between the second lower conductive wire 4 and the second upper conductive wire 8. In figure 2c, the contact portion has been removed in the case of protrusion 43, thus allowing electric contact between the third lower conductive wire 5 and the third upper conductive wire 9. In figure 2d, the contact portion has been removed in the case of protrusion 54, thus allowing electric contact between the fourth lower conductive wire 6 and the fourth upper conductive wire 10.

As may be shown in these figures, the automotive lighting device housing 2 is electrically insulating, and the lower conductive wires 3, 4, 5, 6 and the upper conductive wires 7, 8, 9, 10 are bare wires.

Figure 5 shows a perspective view of a different embodiment of an electronic assembly according to the invention.

In this embodiment, some of the protrusions have been joined forming walls and channels, so that the lower conductive wires have a continuous guide. However, the rest of the electronic assembly works in the same way.

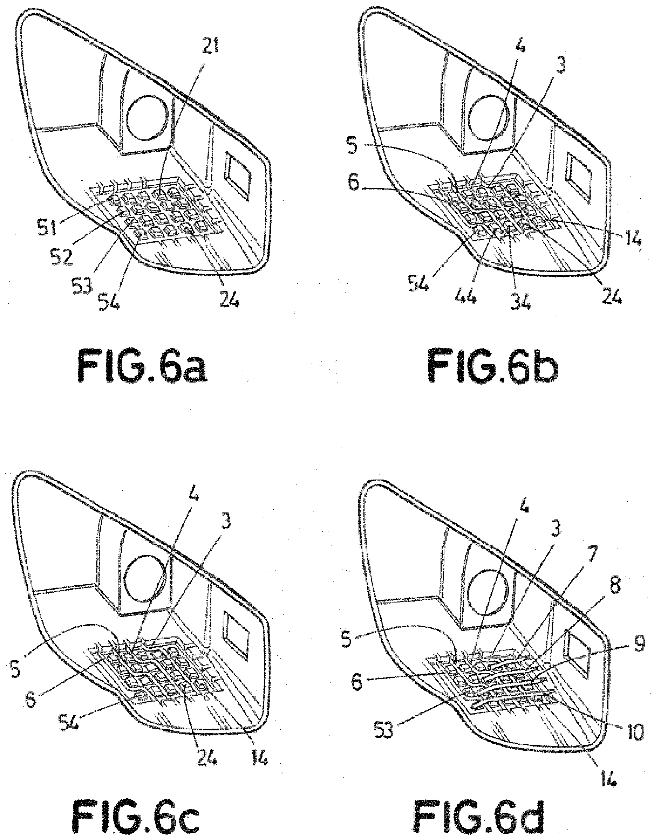

Figures 6a to 6d show the steps of a method for manufacturing a lighting device according to the invention.

Figure 6a shows an automotive lighting device housing 2, which comprises a plurality of protrusions (only one of them, 22, is referenced).

Figure 6b shows some lower conductive wires 3, 4, 5, 6 arranged in contact with the automotive lighting device housing 2, the lower conductive wire 3, 4, 5, 6 having a height with respect to the automotive lighting device housing 2 and being arranged between two protrusions which have a height greater than the height h of the lower conductive wire 3, 4, 5, 6.

Figure 6c shows the automotive lighting device housing 2 with some contact portions which have been detached.

Figure 6d shows the automotive lighting device housing with some upper conductive wires located in the secondary housings, in such a way that a first upper conductive wire 7 is in electrical contact with a first lower conductive wire 3; a second upper conductive wire 8 is in contact with a second lower conductive wire 4, but crosses over the first lower conductive wire 3 without being in electrical contact with it; a third upper conductive wire 9 is in contact with a third lower conductive wire 5, but crosses over the first 3 and second 4 lower conductive wires without being in electrical contact with them; and a fourth upper conductive wire 10 is in contact with a fourth lower conductive wire 6, but crosses over the first 3, second 4 and third 5 lower conductive wires without being in electrical contact with them.

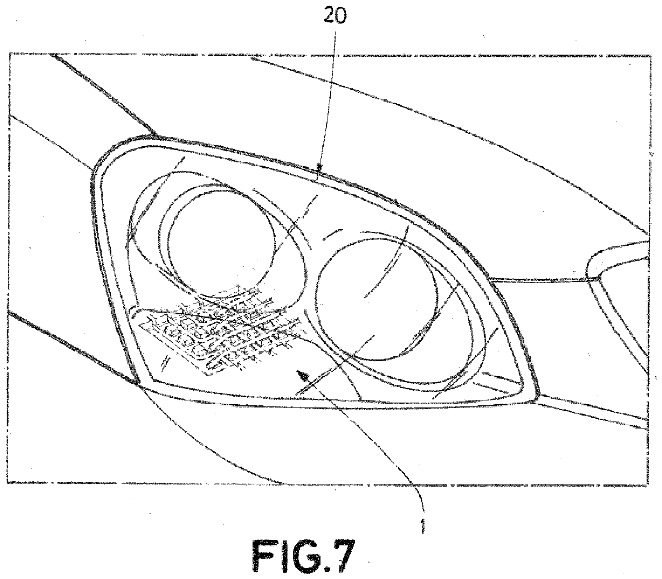

Figure 7 shows an automotive vehicle with a lighting device 20 which has been manufactured according to a method described in the previous figures. This lighting device is smaller, and more reliable, since it does not have an amount of harnesses around the housing cavity.

## Claims

1. Automotive lighting device (1), wherein
an automotive lighting device housing (2) comprising at least a first protrusion (12) and a second protrusion (22), the first protrusion (12) protruding a first protrusion height (hp1) from the automotive lighting device housing (2) until a first protrusion top base (x10) and the second protrusion (22) protruding a second protrusion height (hp2) from the automotive lighting device housing (2) until a second protrusion top base (x20);
a first lower conductive wire (3) arranged in contact with the automotive lighting device housing (2) between the first and the second protrusions, the first lower conductive wire (3) having a first lower wire height (hw1) with respect to the automotive lighting device housing (2), the first lower wire height (hw1) being lower than the first protrusion height (hp1) and the second protrusion height (hp2);
a second lower conductive wire (4) arranged adjacent to the second protrusion and having a second lower wire height (hw2); **characterized in that**
an upper conductive wire (8) is deposited in contact with the top bases (x10, x20) of the first and second protrusions, and in electrical contact with the second lower conductive wire (4).

2. Automotive lighting device (1) according to claim 1, wherein the second lower conductive wire (4) is located between the second protrusion and a third protrusion which has a third protrusion height (hp3) lower than the second lower wire height (hw2).

3. Automotive lighting device (1) according to any of claims 1 or 2, further comprising further lower conductive wires (5, 6) deposited in contact with the automotive lighting device housing (2), and not in electrical contact with the upper conductive wire (8).

4. Automotive lighting device (1) according to any of the preceding claims, further comprising
further protrusions, each further protrusion comprising a further top base, and
further upper conductive wires (7, 9, 10), each further upper conductive wire being deposited in contact with at least one of the further top bases.

5. Automotive lighting device (1) according to any of the preceding claims, wherein each protrusion comprises a secondary housing (xs) at its top base, this secondary housing (xs) intended to keep one upper conductive wire partially housed in this secondary housing (xs).

6. Automotive lighting device (1) according to any of the preceding claims wherein each protrusion comprises
a base portion (x1); and
a contact portion (x2), the contact portion containing the top base (x0) and being detachable from the base portion (x1) of the protrusion,
so that when the contact portion (x2) is detached, an upper conductive wire (7, 8, 9, 10) in contact with the base portion (x1) makes contact with a lower conductive wire (3, 4, 5, 6) which is located between this base portion (x1) and another protrusion,
wherein the size of the base portion (x1) is enough to guide a lower conductive wire which is located between this base portion (x1) and another protrusion.

7. Automotive lighting device (1) according to claim 6, wherein there is a frangible element (xf) delimiting the contact portion from the base portion (x1) of the protrusion.

8. Automotive lighting device (1) according to any of the preceding claims, wherein the automotive lighting device housing (2) is electrically insulating, and the upper conductive wires and the lower conductive wires are bare wires.

9. Automotive lighting device (1) according to any of the preceding claims, wherein protrusions are arranged in a matrix defining row paths and column paths between them, and a lower conductive wire comprises a first portion arranged in a row path and a second portion arranged in a different row path.

10. Automotive lighting device (1) according to claim 9, wherein some protrusions belonging to the same row are joint forming a wall.

11. Method for manufacturing a lighting device (1), **characterized in that** the method comprising the steps of
providing an automotive lighting device housing (2) comprising at least a first protrusion (12) and a second protrusion (22), the first protrusion protruding a first protrusion height (hp1) from the automotive lighting device housing (2) until a first protrusion top base (x10) and the second protrusion (22) protruding a second protrusion height (hp2) from the automotive lighting device housing (2) until a second protrusion top base (x20);
providing a first lower conductive wire (3) arranged in contact with the automotive lighting device housing (2), the first lower conductive wire (3) having a first lower wire height (hw1) with respect to the automotive lighting device housing (2) and being arranged between the first and the second protrusions, the lower wire height (hw1) being lower than the first protrusion height (hp1) and the second protrusion height (hp2);
providing a second lower conductive wire (4) arranged adjacent to the second protrusion and having a second lower wire height (hw2);
providing an upper conductive wire (8) deposited in contact with the top bases (x10, x20) of the first and second protrusions, and in electrical contact with the second lower conductive wire (4).

12. Method for manufacturing a lighting device (1) according to claim 11, further comprising the step of detaching a contact portion (x2) from a detachable protrusion, so that
a base portion (x1) of the detachable protrusion remains in contact with the automotive lighting device housing (2);
the upper conductive wire (8) in contact with the base portion (x1) makes contact with the second lower conductive wire (4) which is located between this base portion (x1) and another protrusion, and
the second lower conductive wire (4) which is located between this base portion (x1) and another protrusion is guided between this base portion (x1) and the other protrusion.

## Patentansprüche

1. Kraftfahrzeugbeleuchtungsvorrichtung (1), wobei
ein Kraftfahrzeugbeleuchtungsvorrichtungsgehäuse (2) mindestens einen ersten Vorsprung (12) und einen zweiten Vorsprung (22) umfassend, wobei der erste Vorsprung (12) eine erste Vorsprunghöhe (hp1) von dem Kraftfahrzeugbeleuchtungsvorrichtungsgehäuse (2) bis zu einer ersten oberen Vorsprungbasis (x10) hervorsteht und der zweite Vorsprung (22) eine zweite Vorsprunghöhe (hp2) von dem Kraftfahrzeugbeleuchtungsvorrichtungsgehäuse (2) bis zu einer zweiten oberen Vorsprungbasis (x20) hervorsteht;
ein erster unterer Leitungsdraht (3) in Kontakt mit dem Kraftfahrzeugbeleuchtungsvorrichtungsgehäuse (2) zwischen dem ersten und dem zweiten Vorsprung angeordnet ist, wobei der erste untere Leitungsdraht (3) eine erste untere Drahthöhe (hw1) in Bezug auf das Kraftfahrzeugbeleuchtungsvorrichtungsgehäuse (2) aufweist, wobei die erste untere Drahthöhe (hw1) niedriger als die erste Vorsprunghöhe (hp1) und die zweite Vorsprunghöhe (hp2) ist;
ein zweiter unterer Leitungsdraht (4) angrenzend an den zweiten Vorsprung angeordnet ist und eine zweite untere Drahthöhe (hw2) aufweist; **dadurch gekennzeichnet, dass**
ein oberer Leitungsdraht (8) in Kontakt mit den oberen Basen (x10, x20) des ersten und des zweiten Vorsprungs und in elektrischem Kontakt mit dem zweiten unteren Leitungsdraht (4) angeordnet ist.

2. Kraftfahrzeugbeleuchtungsvorrichtung (1) nach Anspruch 1, wobei der zweite untere Leitungsdraht (4) zwischen dem zweiten Vorsprung und einem dritten Vorsprung angeordnet ist, der eine dritte Vorsprunghöhe (hp3) aufweist, die niedriger als die zweite untere Drahthöhe (hw2) ist.

3. Kraftfahrzeugbeleuchtungsvorrichtung (1) nach einem der Ansprüche 1 oder 2, ferner umfassend weitere untere Leitungsdrähte (5, 6), die in Kontakt mit dem Kraftfahrzeugbeleuchtungsvorrichtungsgehäuse (2) und nicht in elektrischem Kontakt mit dem oberen Leitungsdraht (8) angeordnet sind.

4. Kraftfahrzeugbeleuchtungsvorrichtung (1) nach einem der vorhergehenden Ansprüche, ferner umfassend
weitere Vorsprünge, wobei jeder weitere Vorsprung eine weitere obere Basis umfasst, und
weitere obere Leitungsdrähte (7, 9, 10), wobei jeder weitere obere Leitungsdraht in Kontakt mit mindestens einer der weiteren oberen Basen angeordnet ist.

5. Kraftfahrzeugbeleuchtungsvorrichtung (1) nach einem der vorhergehenden Ansprüche, wobei jeder Vorsprung ein sekundäres Gehäuse (xs) an seiner oberen Basis umfasst, wobei dieses sekundäre Gehäuse (xs) dafür vorgesehen ist, einen oberen Leitungsdraht teilweise in diesem sekundären Gehäuse (xs) aufgenommen zu halten.

6. Kraftfahrzeugbeleuchtungsvorrichtung (1) nach einem der vorhergehenden Ansprüche, wobei jeder Vorsprung umfasst
einen Basisabschnitt (x1); und
einen Kontaktabschnitt (x2), wobei der Kontaktabschnitt die obere Basis (x0) enthält und von dem Basisabschnitt (x1) des Vorsprungs abnehmbar ist,
so dass, wenn der Kontaktabschnitt (x2) abgenommen ist, ein oberer Leitungsdraht (7, 8, 9, 10) in Kontakt mit dem Basisabschnitt (x1) einen Kontakt mit einem unteren Leitungsdraht (3, 4, 5, 6) herstellt, der zwischen diesem Basisabschnitt (x1) und einem anderen Vorsprung angeordnet ist,
wobei die Größe des Basisabschnitts (x1) ausreicht, um einen unteren Leitungsdraht zu führen, der zwischen diesem Basisabschnitt (x1) und einem anderen Vorsprung angeordnet ist.

7. Kraftfahrzeugbeleuchtungsvorrichtung (1) nach Anspruch 6, wobei ein brechbares Element (xf) vorhanden ist, das den Kontaktabschnitt von dem Basisabschnitt (x1) des Vorsprungs abgrenzt.

8. Kraftfahrzeugbeleuchtungsvorrichtung (1) nach einem der vorhergehenden Ansprüche, wobei das Kraftfahrzeugbeleuchtungsvorrichtungsgehäuse (2) elektrisch isolierend ist und die oberen Leitungsdrähte und die unteren Leitungsdrähte blanke Drähte sind.

9. Kraftfahrzeugbeleuchtungsvorrichtung (1) nach einem der vorhergehenden Ansprüche, wobei Vorsprünge in einer Matrix angeordnet sind, die Reihenpfade und Spaltenpfade zwischen diesen definiert, und wobei ein unterer Leitungsdraht einen ersten Abschnitt, der in einem Reihenpfad angeordnet ist, und einen zweiten Abschnitt, der in einem anderen Reihenpfad angeordnet ist, umfasst.

10. Kraftfahrzeugbeleuchtungsvorrichtung (1) nach Anspruch 9, wobei einige Vorsprünge, die zu derselben Reihe gehören, so verbunden sind, dass sie eine Wand ausbilden.

11. Verfahren zum Herstellen einer Beleuchtungsvorrichtung (1), **dadurch gekennzeichnet, dass** das Verfahren folgende Schritte umfasst
Bereitstellen eines Kraftfahrzeugbeleuchtungsvorrichtungsgehäuses (2), das mindestens einen ersten Vorsprung (12) und einen zweiten Vorsprung (22) umfasst, wobei der erste Vorsprung eine erste Vorsprunghöhe (hp1) von dem Kraftfahrzeugbeleuchtungsvorrichtungsgehäuse (2) bis zu einer ersten oberen Vorsprungbasis (x10) hervorsteht und der zweite Vorsprung (22) eine zweite Vorsprunghöhe (hp2) von dem Kraftfahrzeugbeleuchtungsvorrichtungsgehäuse (2) bis zu einer zweiten oberen Vorsprungbasis (x20) hervorsteht;
Bereitstellen eines erstes unteren Leitungsdrahts (3), der in Kontakt mit dem Kraftfahrzeugbeleuchtungsvorrichtungsgehäuse (2) angeordnet ist, wobei der erste untere Leitungsdraht (3) eine erste untere Drahthöhe (hw1) in Bezug auf das Kraftfahrzeugbeleuchtungsvorrichtungsgehäuse (2) aufweist und zwischen dem ersten und dem zweiten Vorsprung angeordnet ist, wobei die untere Drahthöhe (hw1) niedriger als die erste Vorsprunghöhe (hp1) und die zweite Vorsprunghöhe (hp2) ist;
Bereitstellen eines zweiten unteren Leitungsdrahts (4), der angrenzend an den zweiten Vorsprung angeordnet ist und eine zweite untere Drahthöhe (hw2) aufweist;
Bereitstellen eines oberen Leitungsdrahts (8), der in Kontakt mit den oberen Basen (x10, x20) des ersten und des zweiten Vorsprungs und in elektrischem Kontakt mit dem zweiten unteren Leitungsdraht (4) angeordnet ist.

12. Verfahren zum Herstellen einer Beleuchtungsvorrichtung (1) nach Anspruch 11, ferner umfassend den Schritt Abnehmen eines Kontaktabschnitts (x2) von einem abnehmbaren Vorsprung, so dass
ein Basisabschnitt (x1) des abnehmbaren Vorsprungs in Kontakt mit dem Kraftfahrzeugbeleuchtungsvorrichtungsgehäuse (2) bleibt;
der obere Leitungsdraht (8), der in Kontakt mit dem Basisabschnitt (x1) ist, einen Kontakt mit dem zweiten unteren Leitungsdraht (4) herstellt, der zwischen diesem Basisabschnitt (x1) und einem anderen Vorsprung angeordnet ist, und
der zweite untere Leitungsdraht (4), der zwischen diesem Basisabschnitt (x1) und einem anderen Vorsprung angeordnet ist, zwischen diesem Basisabschnitt (x1) und dem anderen Vorsprung geführt wird.

## Revendications

1. Dispositif d'éclairage automobile (1), dans lequel
un boîtier de dispositif d'éclairage automobile (2) comprenant au moins une première partie saillante (12) et une deuxième partie saillante (22), la première partie saillante (12) faisant saillie d'une hauteur de première partie saillante (hp1) à partir du boîtier de dispositif d'éclairage automobile (2) jusqu'à une base supérieure de première partie saillante (x10) et la deuxième partie saillante (22) faisant saillie d'une hauteur de deuxième partie saillante (hp2) à partir du boîtier de dispositif d'éclairage automobile (2) jusqu'à une base supérieure de deuxième partie saillante (x20) ;
un premier fil conducteur inférieur (3) agencé en contact avec le boîtier de dispositif d'éclairage automobile (2) entre les première et deuxième parties saillantes, le premier fil conducteur inférieur (3) ayant une hauteur de premier fil inférieur (hw1) par rapport au boîtier de dispositif d'éclairage automobile (2), la hauteur de premier fil inférieur (hw1) étant inférieure à la hauteur de première partie saillante (hp1) et à la hauteur de deuxième partie saillante (hp2) ;
un second fil conducteur inférieur (4) agencé à côté de la deuxième partie saillante et ayant une hauteur de second fil inférieur (hw2) ; **caractérisé en ce que**
un fil conducteur supérieur (8) est déposé en contact avec les bases supérieures (x10, x20) des première et deuxième parties saillantes, et en contact électrique avec le second fil conducteur inférieur (4).

2. Dispositif d'éclairage automobile (1) selon la revendication 1, dans lequel le second fil conducteur inférieur (4) est situé entre la deuxième partie saillante et une troisième partie saillante qui a une hauteur de troisième partie saillante (hp3) inférieure à la hauteur de second fil inférieur (hw2).

3. Dispositif d'éclairage automobile (1) selon l'une quelconque des revendications 1 ou 2, comprenant en outre d'autres fils conducteurs inférieurs (5, 6) déposés en contact avec le boîtier de dispositif d'éclairage automobile (2), et qui ne sont pas en contact électrique avec le fil conducteur supérieur (8).

4. Dispositif d'éclairage automobile (1) selon l'une quelconque des revendications précédentes, comprenant en outre
d'autres parties saillantes, chaque autre partie saillante comprenant une autre base supérieure, et
d'autres fils conducteurs supérieurs (7, 9, 10), chaque autre fil conducteur supérieur étant déposé en contact avec au moins l'une des autres bases supérieures.

5. Dispositif d'éclairage automobile (1) selon l'une quelconque des revendications précédentes, dans lequel chaque partie saillante comprend un boîtier secondaire (xs) au niveau de sa base supérieure, ce boîtier secondaire (xs) est destiné à garder un fil conducteur supérieur partiellement logé dans ce boîtier secondaire (xs).

6. Dispositif d'éclairage automobile (1) selon l'une quelconque des revendications précédentes dans lequel chaque partie saillante comprend
une partie de base (x1) ; et
une partie de contact (x2), la partie de contact contenant la base supérieure (x0) et étant détachable de la partie de base (x1) de la partie saillante, de sorte que lorsque la partie de contact (x2) est détachée, un fil conducteur supérieur (7, 8, 9, 10) en contact avec la partie de base (x1) entre en contact avec un fil conducteur inférieur (3, 4, 5, 6) qui est situé entre cette partie de base (x1) et une autre partie saillante,
dans lequel la taille de la partie de base (x1) est suffisante pour guider un fil conducteur inférieur qui est situé entre cette partie de base (x1) et une autre partie saillante.

7. Dispositif d'éclairage automobile (1) selon la revendication 6, dans lequel il y a un élément cassant (xf) délimitant la partie de contact à partir de la partie de base (x1) de la partie saillante.

8. Dispositif d'éclairage automobile (1) selon l'une quelconque des revendications précédentes, dans lequel le boîtier de dispositif d'éclairage automobile (2) est isolé électriquement, et les fils conducteurs supérieurs et les fils conducteurs inférieurs sont des fils nus.

9. Dispositif d'éclairage automobile (1) selon l'une quelconque des revendications précédentes, dans lequel des parties saillantes sont agencées dans une matrice définissant des trajets de lignes et des trajets de colonnes entre elles, et un fil conducteur inférieur comprend une première partie agencée dans un trajet de ligne et une deuxième partie agencée dans un trajet de ligne différent.

10. Dispositif d'éclairage automobile (1) selon la revendication 9, dans lequel certaines parties saillantes appartenant à la même ligne sont jointes pour former une paroi.

11. Procédé pour fabriquer un dispositif d'éclairage (1), **caractérisé en ce que** le procédé comprend les étapes suivantes :
la fourniture d'un boîtier de dispositif d'éclairage automobile (2) comprenant au moins une première partie saillante (12) et une deuxième partie saillante (22), la première partie saillante faisant saillie d'une hauteur de première partie saillante (hp1) à partir du boîtier de dispositif d'éclairage automobile (2) jusqu'à une base supérieure de première partie saillante (x10) et la deuxième partie saillante (22) faisant saillie d'une hauteur de deuxième partie saillante (hp2) à partir du boîtier de dispositif d'éclairage automobile (2) jusqu'à une base supérieure de deuxième partie saillante (x20) ;
la fourniture d'un premier fil conducteur inférieur (3) agencé en contact avec le boîtier de dispositif d'éclairage automobile (2), le premier fil conducteur inférieur (3) ayant une hauteur de premier fil inférieur (hw1) par rapport au boîtier de dispositif d'éclairage automobile (2) et étant agencé entre les première et deuxième parties saillantes, la hauteur de fil inférieur (hw1) étant inférieure à la hauteur de première partie saillante (hp1) et à la hauteur de deuxième partie saillante (hp2) ;
la fourniture d'un second fil conducteur inférieur (4) agencé à côté de la deuxième partie saillante et ayant une hauteur de second fil inférieur (hw2) ;
la fourniture d'un fil conducteur supérieur (8) déposé en contact avec les bases supérieures (x10, x20) des première et deuxième parties saillantes, et en contact électrique avec le second fil conducteur inférieur (4).

12. Procédé pour fabriquer un dispositif d'éclairage (1) selon la revendication 11, comprenant en outre l'étape de détachement d'une partie de contact (x2) d'une partie saillante détachable, de sorte que
une partie de base (x1) de la partie saillante détachable reste en contact avec le boîtier de dispositif d'éclairage automobile (2) ;
le fil conducteur supérieur (8) en contact avec la partie de base (x1) entre en contact avec le second fil conducteur inférieur (4) qui est situé entre cette partie de base (x1) et une autre partie saillante, et
le second fil conducteur inférieur (4) qui est situé entre cette partie de base (x1) et une autre partie saillante est guidé entre cette partie de base (x1) et l'autre partie saillante.
